# EUROPEAN PATENT APPLICATION

(11) **EP 4 822 291 A1**
(43) Date of publication of application: **14.10.2026**
(21) Application number: 25787051.9
(22) Date of filing: 27.03.2025
(51) Int. Cl.: G01B 11/26, G01B 11/02, G01N 21/88, H01M 10/04

(54) **METHOD FOR INSPECTING ALIGNMENT AND DAMAGE OF ELECTRODE ASSEMBLY**

(30) Priority: 08.04.2024 KR 20240047558
(71) Applicant: LG Energy Solution, Ltd., Seoul 07335 (KR)
(72) Inventor: HA, Heonwook, Daejeon 34122 (KR); LEE, Changseok, Daejeon 34122 (KR); KIM, Yong Nam, Daejeon 34122 (KR); LEE, Yong Jun, Daejeon 34122 (KR)
(74) Representative: Plasseraud IP
(86) International application number: PCT/KR2025/003963
(87) International publication number: WO 2025/216459

(57) **Abstract**

The present invention provides a visual inspection method and an inspection apparatus therefor capable of detecting an alignment defect between an electrode and a separator and/or an alignment defect between a first electrode and a second electrode by capturing in image a first electrode and a second electrode stacked in a zigzag stacking process.

## Description

### [TECHNICAL FIELD]

This application claims the benefit of priority based on Korean Patent Application No. 10-2024-0047558 filed on April 8, 2024, entire content disclosed in the document of the patent applications is included as a portion of this specification.

The present invention relates to a method of inspecting alignment and damage of an electrode and a separator during a manufacturing process of an electrode assembly and an inspection apparatus therefor.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module or battery pack in which multiple battery cells are electrically connected is used.

Meanwhile, as a type of unit secondary battery cell, cylindrical, prismatic and pouch-type battery cells are known. Since it is desirable to manufacture medium-to-large-sized battery modules as small and light as possible, prismatic batteries and pouch-type batteries that may be stacked with a high degree of integration and have a small weight per capacity are mainly used as battery cells for medium-to-large-sized battery modules.

Among these, pouch-type battery cells have various structures depending on the method of manufacturing the electrode assembly accommodated therein. In particular, recently, highcapacity electrode assemblies are often manufactured at a high speed using the zigzag stacking method, which alternately stacks anodes and cathodes between each layer of a separator folded in a zigzag pattern.

Meanwhile, in case of this zigzag stacking, since the stacking is performed at a high speed, defects such as misalignment between the electrode and separator and between the anode and cathode easily occur. Such defects may cause the dimensional specifications of the electrode assembly to be inconsistent and may have a significant impact on the capacity, voltage, stability, etc. of the electrode assembly. Therefore, a method for detecting such alignment defects during the zigzag stacking process is necessary.

In particular, when the anode is stacked, the cathode is covered by the separator, and when the cathode is stacked, the anode is covered by the separator. As a result, the greatest difficulty lies in detecting the alignment between the anode and cathode, which are inevitably stacked in different layers.

In addition, a method for detecting damage of the separator is also necessary. This is because when the separator is damaged, such as by a hole, a short circuit may occur between the anode and cathode, which may lead to safety issues such as fire. The problem here is that after the electrodes are stacked, the electrodes mostly cover the separator thereunder. Thus, in order to detect both the alignment of the electrodes and the damage of the separator, it is necessary to capture the image of both before and after the stacking of the electrodes. However, this is very difficult since the zigzag stacking occurs very quickly.

### [DISCLOSURE]

### [TECHNICAL PROBLEM]

In order to solve above-described problems of prior art, it is an object of the present invention to provide an inspection method and an inspection apparatus capable of inspecting the alignment of electrodes with respect to each other and the alignment of the electrode with respect to the separator.

It is an object of the present invention to provide an inspection method and an inspection apparatus capable of inspecting damage of the electrode.

It is another object of the present invention to provide an inspection method and an inspection apparatus capable of inspecting damage of the separator.

It is yet another object of the present invention to provide an inspection method and an inspection apparatus capable of inspecting damage and/or alignment of an electrode and/or a separator with a minimum of image capturing.

It is yet another object of the present invention to provide an inspection method and an inspection apparatus capable of inspecting the relative arrangement and alignment of an electrode and/or a separator without being affected by vibration or rotation of a camera or a manufacturing equipment.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides an inspection method of visually inspecting manufacturing defects of an electrode assembly in a manufacturing process the electrode assembly manufacture by stacking a plurality of electrodes and a separator on a stack table wherein a reference point arranged at a fixed position on the stack table is captured by image together with the electrode and the separator.

The separator has a first surface and a second surface facing each other. In the first step and the second step of the manufacturing process described below, defined are: a first area of a first surface of the separator whereon a first electrode is stacked; and a second area of the first surface of the separator folded to face the first area with the first electrode interposed therebetween. Similarly, in the third step and the fourth step of the manufacturing method described below, defined are: a first area of a second surface of the separator whereon a second electrode is stacked; and a second area of the second surface of the separator folded to face the first area with the second electrode interpose therebetween.

The manufacturing process includes: a first step of stacking a first electrode on a first area of a first surface of the separator and gripping by a first gripper a boundary between the first area of the first surface and a second area of the first surface of the separator; a second step of folding the separator such that the first area of the first surface faces the second area of the first surface; a third step of stacking a second electrode on a first area of a second surface of the separator and gripping by a second gripper a boundary between the first area of the second surface and a second area of the second surface of the separator; and a fourth step of folding the separator such that the first area of the second surface faces the second area of the second surface. In the manufacturing process, the first step to the fourth step may be repeated several times.

The inspection method includes a first shooting step, between the first step and the second step, of obtaining a first image by capturing a first shooting area including at least a portion of the first area of the first surface of the separator and at least one reference point.

According to the present invention, by capturing in image the first electrode and the separator together with the reference point at a fixed position of the stack table, the positions of the first electrode and the separator may be quantified merely by analyzing the first image.

A plurality of first shooting areas may be provided. Here, at least one reference point must be provided in each of the plurality of first shooting areas.

It is preferable that the reference point has a rotationally asymmetrical shape or arrangement. When the reference point is provided rotationally symmetric, it is difficult only using the first image to identify whether the first electrode or the separator has rotated around the reference point. For example, a plurality of reference points arranged in at least one of the horizontal and vertical directions may be provided. However, a single reference point may be provided in rotationally asymmetrical shape.

The inspection method may further include a step of analyzing the first image to inspect damage of the first electrode. The damage may include punctures, scratches, tears, folding, etc.

The inspection method may further include a step of analyzing the first image to detect a relative position of the first electrode with respect to the stack table.

Specifically, in the inspection method, a predetermined area C of interest may be set based on the position of the reference point shown in the first image. Here, the relative position of the first electrode with respect to the stack table may be detected based on the position of the edge of the first electrode shown in the area C of interest.

According to an embodiment of the present invention, it is preferable that the area C of interest is set to be a plurality of areas arranged to include at least a portion of the edge of the first electrode. For example, two or more area C of interest may be provided at each of the two horizontal ends and the two vertical ends of the first electrode, and accordingly, the center position and the rotation of the first electrode with respect to the stack table may be identified.

The inspection method may further include a step of analyzing the first image to detect the relative position of the separator with respect to the stack table.

Specifically, in the inspection method, a predetermined area S1 of interest may be set based on the position of the reference point shown in the first image. Here, the relative position of the separator with respect to the stack table may be detected based on the position of the edge of the separator shown in the area S1 of interest.

According to an embodiment of the present invention, it is preferable that the area S1 of interest is set to be a plurality of areas arranged to include at least a portion of the edge of the separator. For example, two or more areas S1 of interest may be provided at each of the two horizontal ends and two vertical ends of the separator, and accordingly, the center position and the rotation of the separator with respect to the stack table may be identified.

The inspection method may further include a step of inspecting the alignment of the first electrode with respect to the separator based on the relative position of the first electrode with respect to the reference point and the relative position of the separator with respect to the reference point. That is, the alignment of the first electrode with respect to the separator may be identified by comparing the positions of the first electrode and the separator with respect to the stack table analyzed from the first image.

According to an embodiment of the present invention, the alignment of the first electrode with respect to the separator may be inspected by comparing a relative position of an edge of the first electrode shown in the area C of interest with a relative position of the edge of the separator shown in the area S1 of interest.

According to an embodiment of the present invention, not only the relative positions of the first electrode and the separator with respect to the stack table, but also the relative positions of the first electrode and the separator with respect to each other may be determined from a single image.

The area S1 of interest may include one area including the first horizontal end of the separator and another area including the second horizontal end of the first gripper. Here, when inspecting the alignment of the first electrode with respect to the separator, the relative position of the second horizontal end of the first gripper with respect to the reference point may be regarded to correspond to that of the second horizontal end of the separator with respect to the reference point.

In the first image, the separator appears in an unfolded state prior to folding. Thus, the second horizontal end of the separator is not defined. However, since the separator is folded while wrapping around the first gripper, the second horizontal end of the separator formed by folding the separator in the second step corresponds to the second horizontal end of the first gripper. Thus, by detecting the relative position of the second horizontal end of the first gripper with respect to the reference point as described above, the position of the second horizontal end of the separator formed by folding the separator may be detected in advance.

The inspection method may further include a second shooting step S15, between the third step S14 and the fourth step S16, of obtaining a second image by capturing a second shooting area including at least a portion of the first area of the second surface of the separator and at least one reference point.

The inspection method may further include: a step of analyzing the second image to detect a relative position of the second electrode with respect to the stack table; a step of analyzing the second image to detect a relative position of the separator with respect to the stack table; a step of inspecting an alignment of the second electrode with respect to the separator based on the relative position of the second electrode with respect to the reference point and the relative position of the separator with respect to the reference point; and a step of inspecting the alignment of the first electrode and the second electrode with respect to each other by comparing the alignment of the first electrode with respect to the separator and the alignment of the second electrode with respect to the separator.

Specifically, according to an embodiment of the present invention, a predetermined area A of interest and an area S2 of interest may be set based on the position of the reference point shown in the second image. Here, the relative position of the second electrode with respect to the stack table may be detected based on the position of the edge of the second electrode shown in the area A of interest, and the relative position of the separator with respect to the stack table may be detected based on the position of the edge of the separator shown in the area S2 of interest.

As in analyzing the first image, the alignment of the second electrode to the separator may be inspected by comparing the relative position of the edge of the second electrode in the area A of interest with that of the edge of the separator in the area S2 of interest. Thus, the alignment between the first electrode and the second electrode may be inspected based on the alignment of the first electrode with respect to the separator and the alignment of the second electrode with respect to the separator.

According to an embodiment of the present invention, since the alignment of the first electrode with respect to the separator and the alignment of the second electrode with respect to the separator are relatively identified in the first image and the second image, respectively, the relative alignment between the first electrode and the second electrode may be identified regardless of the relative position or rotation of the stack table.

The area S2 of interest may include one area including the second horizontal end of the separator and another area including the first horizontal end of the second gripper. Here, when inspecting the alignment of the second electrode with respect to the separator, the relative position of the first horizontal end of the second gripper with respect to the reference point may be regarded to correspond to that of the first horizontal end of the separator with respect to the reference point.

In the second image, the separator appears in an unfolded state prior to folding. Thus, the first horizontal end of the separator is not defined. However, since the separator is folded while wrapping around the second gripper, the first horizontal end of the separator formed by folding the separator in the first step corresponds to the first horizontal end of the second gripper. Thus, by detecting the relative position of the first horizontal end of the second gripper with respect to the reference point as described above, the position of the first horizontal end of the separator formed by folding the separator may be detected in advance.

The present invention also provides an inspection apparatus visually inspecting manufacturing defects of an electrode assembly in a manufacturing process the electrode assembly manufacture by stacking a plurality of electrodes and a separator wherein a reference point arranged at a fixed position on a stack table car captured by image together with the electrode and the separator.

The separator has a first surface and a second surface facing each other. In the first step and the second step of the manufacturing process described below, defined are: a first area of a first surface of the separator whereon a first electrode is stacked; and a second area of the first surface of the separator folded to face the first area with the first electrode interposed therebetween. Similarly, in the third step and the fourth step of the manufacturing method described below, defined are: a first area of a second surface of the separator whereon a second electrode is stacked; and a second area of the second surface of the separator folded to face the first area with the second electrode interpose therebetween.

The manufacturing process includes: a first step of stacking a first electrode on a first area of a first surface of the separator and gripping by a first gripper a boundary between the first area of the first surface and a second area of the first surface of the separator; a second step of folding the separator such that the first area of the first surface faces the second area of the first surface; a third step of stacking a second electrode on a first area of a second surface of the separator and gripping by a second gripper a boundary between the first area of the second surface and a second area of the second surface of the separator; and a fourth step of folding the separator such that the first area of the second surface faces the second area of the second surface. In the manufacturing process, the first step to the fourth step may be repeated several times.

The inspection apparatus includes: a stack table whereon the first electrode, the second electrode and the separator are stacked; a reference point provided on the stack table at a fixed position; a first camera obtaining a first image by capturing a predetermined first shooting area encompassing the reference point; and a processing unit analyzing the first image to detect a misalignment of the electrode assembly.

Here, the first shooting area includes: at least a portion of two vertical ends and at least a portion of two horizontal ends of the first electrode; and at least a portion of two vertical ends and at least a portion of the first horizontal end of the separator.

According to the present invention, the positions of the first electrode and the separator with respect to the stack table from the first image may be detected by digitization based on the positions of the ends thereof, and the alignment of the first electrode with respect to the separator may also be identified in comparison thereto.

The first shooting area may include at least a portion of the second horizontal end of the first gripper. The position of the second horizontal end of the first gripper may be regarded as the position of the second horizontal end of the separator after the separator is folded.

A plurality of first cameras may be provided. For example, a pair of first cameras arranged vertically are provided, and among the pair of first cameras, a first one of the pair of first cameras may capture an area including at least a portion of the first electrode and at least a portion of a first vertical end of the separator, and a second one of the pair of first cameras may capture an area including at least a portion of the first electrode and at least a portion of the second vertical end of the separator. Accordingly, the relative position of each of the four ends of the first electrode and the separator with respect to the reference point may be accurately identified, and the center position and the rotation of the first electrode and the separator with respect to the stack table may be accurately identified.

The inspection apparatus may further include a second camera obtaining a second image by capturing the second shooting area. Here, the second shooting area according to the embodiment includes: at least a portion of two vertical ends and at least a portion of two horizontal ends of the second electrode; and at least a portion of two vertical ends and at least a portion of the second horizontal end of the separator, and the processing unit may analyze the first image and the second image to detect misalignment of the electrode assembly.

The processing unit may detect the alignment of the first electrode and the alignment of the second electrode with respect to the separator from the first image and the second image, and may also detect the alignment between the first electrode and the second electrode based on the alignment of the first electrode and the alignment of the second electrode.

The second shooting area may include at least a portion of the first horizontal end of the second gripper. The position of the first horizontal end of the second gripper may be regarded as the position of the first horizontal end of the separator after the separator is folded.

### [ADVANTAGEOUS EFFECTS]

The present invention may provide an inspection method and an inspection apparatus capable of inspecting the alignment of electrodes with respect to each other and the alignment of the electrode with respect to the separator.

Specifically, the present invention may provide an inspection method and an inspection apparatus capable of inspecting the relative arrangement and alignment of an electrode and/or a separator without being affected by vibration or rotation of a camera or a manufacturing equipment by comparing relative positions with respect to a fixed reference point.

In addition, the present invention may provide an inspection method and an inspection apparatus capable of a complete inspection of the separator for damage by capturing the second area before the folding of the separator together with the electrode.

According to the present invention, provided is an inspection method and an inspection apparatus for inspecting damage of an electrode.

The inspection method and the inspection apparatus according to the present invention are advantageous in that damage and/or alignment of the electrode and/or the separator may be inspected with a minimum of capturing in image by regarding the end of the gripper as the end of the separator after folding, or simultaneously capturing the portion where the electrode is stacked and the unfolded portion of the separator.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 illustrate a first electrode before and after stacking, respectively, in a manufacturing process according to an embodiment of the present invention.
FIG. 3 is a vertical view of the stack table shown in FIG. 2.
FIGS. 4 and 5 illustrate a second electrode before and after stacking, respectively, in a manufacturing process according to an embodiment of the present invention.
FIG. 6 is a vertical view of the stack table shown in FIG. 5.
FIG. 7 is a flow chart illustrating an inspection method according to a first embodiment of the present invention.
FIG. 8 illustrates an inspection apparatus capturing a first image according to the first embodiment of the present invention.
FIG. 9 illustrates a first image with an area of interest set according to the first embodiment of the present invention.
FIG. 10 illustrates a relative position of an electrode or separator with respect to an area of interest according to the first embodiment of the present invention.
FIG. 11 illustrates an inspection apparatus capturing a second image according to the first embodiment of the present invention.
FIG. 12 illustrates a second image with an area of interest set according to the first embodiment of the present invention.
FIG. 13 is a flow chart illustrating an inspection method according to a second embodiment of the present invention.
FIG. 14 is a view illustrating an inspection apparatus capturing a first image according to the second embodiment of the present invention.
FIG. 15 illustrates a first gap, a third gap and a fourth gap according to the second embodiment of the present invention.
FIG. 16 is a view illustrating an inspection apparatus capturing a second image according to the second embodiment of the present invention.
FIG. 17 illustrates a second gap, a fifth gap and a sixth gap according to the second embodiment of the present invention.

### [DESCRIPTION OF REFERENCE NUMERALS]

10: nip roller
11: stack table
   110: center axis
   111: reference point
131: first gripper
132: second gripper
141: first camera
   151: first shooting area
142: second camera
   152: second shooting area
16: transport means
20: separator
   21: first surface
      211: first area
      212: second area
   22: second surface
      221: first area
      222: second area
31: first electrode
   310: tab
32: second electrode
   320: tab
R: area of interest
G: gap

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Throughout the specification, the term "electrode" refers to both an anode and a cathode collectively, or to either an anode or a cathode. In addition, the first electrode and the second electrode herein may be an anode and a cathode, or a cathode and an anode, respectively.

Hereinafter, preferred embodiments of the present invention will be described with reference to the accompanying drawings.

### [ZIGZAG STACKING PROCESS]

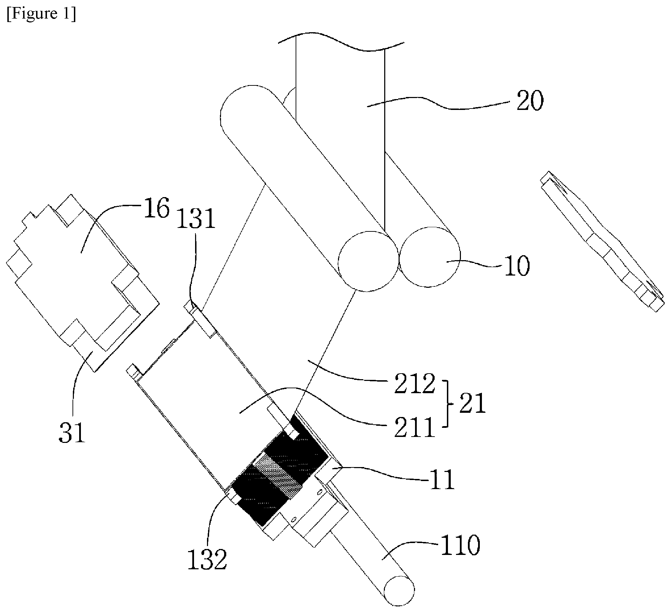

Hereinafter, with reference to FIGS. 1 to 6, a battery manufacturing process according to an embodiment of the present invention will be described in detail. The battery manufacturing process according to the embodiment employs the zigzag stacking method in which the separator is stacked in a zigzag shape. In carrying out the present invention, not only the embodiment described below but also various known zigzag stacking manufacturing processes may be used.

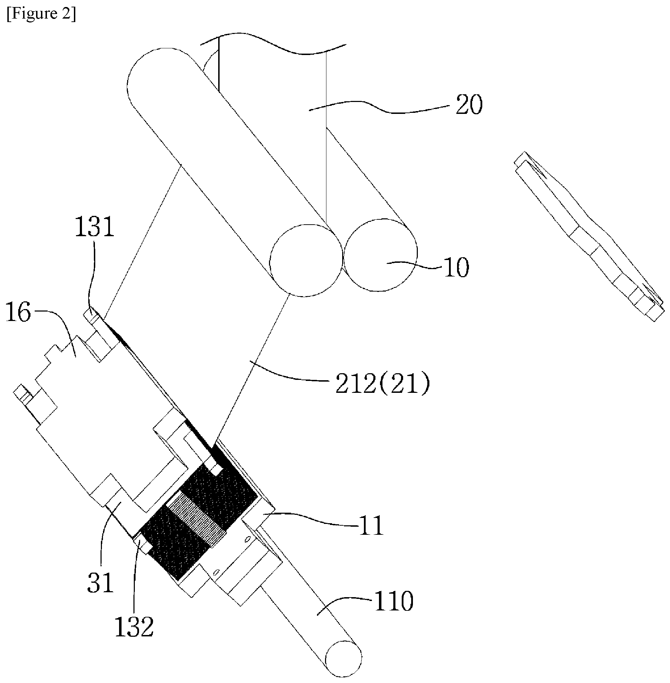

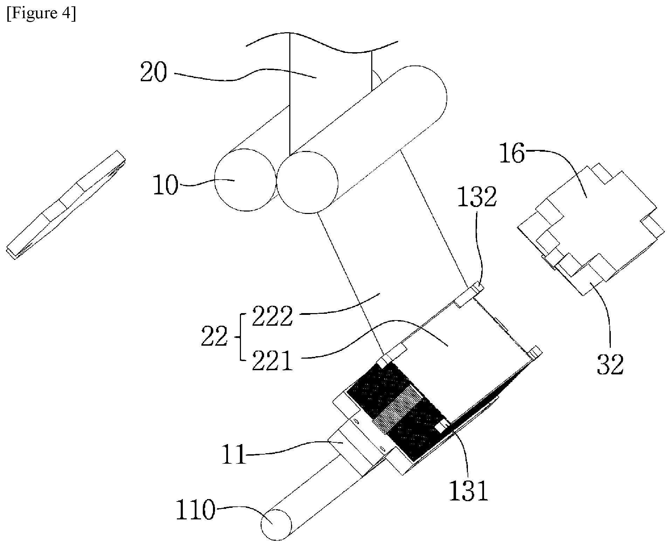

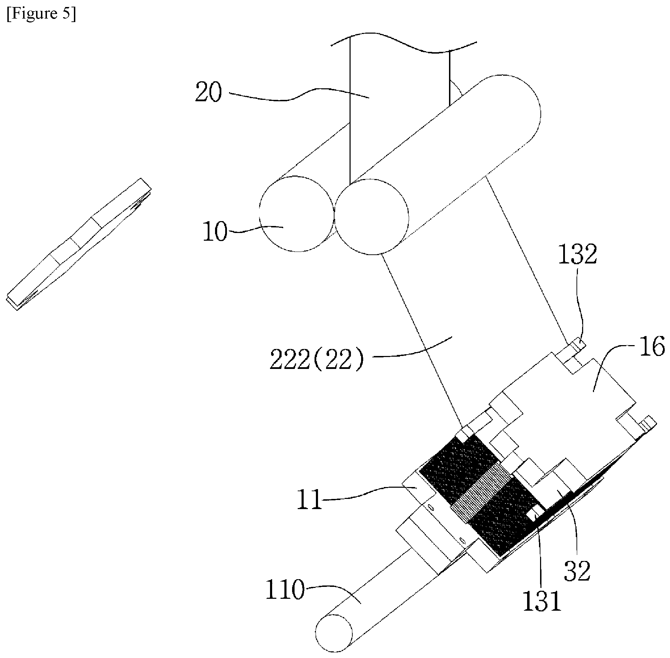

FIGS. 1 and 2 illustrate before and after a first electrode is stacked, respectively, in a manufacturing process according to an embodiment of the present invention, and FIGS. 4 and 5 illustrate before and after a second electrode is stacked, respectively, in a manufacturing process according to an embodiment of the present invention. Referring to FIGS. 1 to 4, the manufacturing process according to an embodiment of the present invention is to form an electrode assembly by alternately and repeatedly stacking the first electrode 31 and the second electrode 32 between each layer of the zigzag-folded separator 20.

The stacking of the separator 20, the first electrode 31 and the second electrode 32 is performed on a stack table 11.

The separator 20 has a sheet shape having a first surface 21 and a second surface 22 opposite to the first surface 21, is unwound from a roll, passed through a nip roller 10, and supplied to the stack table 11.

The first electrode 31 and the second electrode 32 are loaded into the magazines thereof, respectively, transported by the transport means 16 thereof, respectively, and supplied to the stack table 11.

The stack table 11 may rotate by a predetermined angle about a center axis 110 such that the stack table 11 faces the transport means 16 when the first electrode 31 and the second electrode 32 are supplied, respectively. That is, when the first electrode 31 is stacked, the stack table 11 may face the transport means 16 that transports the first electrode 31 by rotating by a predetermined angle in one direction about the center axis 110, and when the second electrode 32 is stacked, the stack table 11 may face the transport means 16 that transports the second electrode 32 by rotating by a predetermined angle in the opposite direction about the center axis 110.

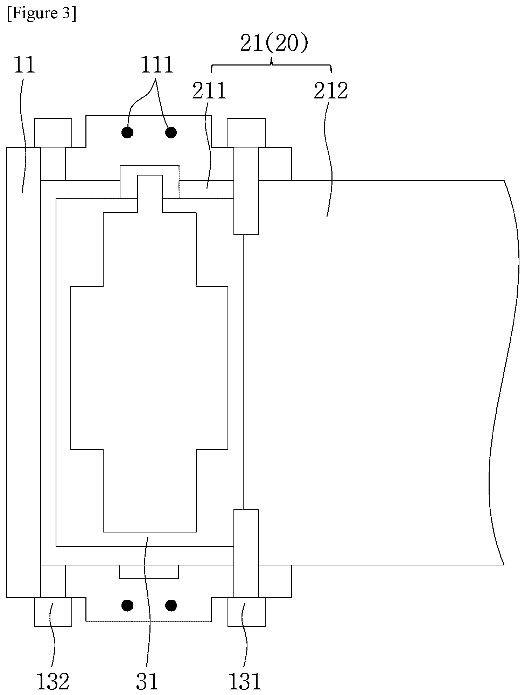

FIG. 3 is a vertical view of the stack table shown in FIG. 2. Referring to FIG. 3 in addition to FIGS. 1 and 2, the first electrode 31 is stacked on a first surface 21 of the separator 20 when the stack table 11 faces the transport means 16 that transports the first electrode 31. Here, the separator 20 may be gripped by the first gripper 131 to form a flat surface on which the first electrode 31 is stacked. The first surface 21 of the separator 20 is divided, with the area gripped by the first gripper 131 as the boundary, into a first area 211 of the separator 20 where the first electrode 31 is stacked and a second area 212 that is in unfolded state prior to folding.

Specifically, first and second horizontal ends of the first area 211 of the first surface of the separator 20 are defined by a first horizontal end of the second gripper 132 and a second horizontal end of the first gripper 131, respectively. The second area 212 of the first surface of the separator 20 is defined as a portion that extends and develops in horizontal direction away from the second horizontal end of the first gripper 131.

That is, in the manufacturing process according to the embodiment, a first step of stacking the first electrode 31 is performed by stacking the first electrode 31 on the first area 211 of the first surface of the separator 20, and the first gripper 131 gripping the boundary between the first area 211 of the first surface and the second area of second surface 212 of the separator 20. Here, the gripping of the separator 20 by the first gripper 131 may be performed before the first electrode 31 is stacked, or, as in FIG. 2, when there is an overlapping area between the first gripper 131 and the first electrode 31, the gripping of the separator 20 may be performed repeatedly before and after the first electrode 31 is stacked.

The manufacturing process according to the embodiment includes a second step, after the first step, in which the separator 20 is folded while wrapping around the first gripper 131. In the second step, the separator 20 may be stacked such that the first area 211 and the second area 212 of the first surface face each other. That is, as the second step is performed, the first electrode 31 is interposed between the first surfaces 21 of the separator 20 under and above the first electrode 31.

Here, the second step is performed by moving the other point of the separator 20 gripped by the first gripper 131 while the stack table 11 rotates with the nip roller 10 fixing one point of the separator 20.

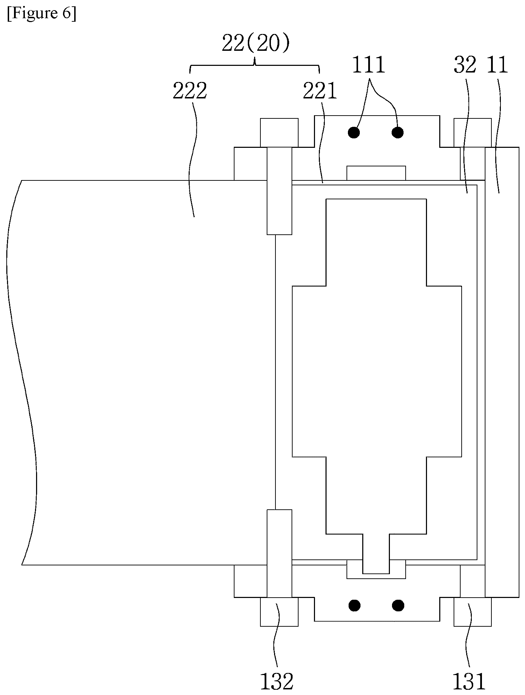

FIG. 6 is a vertical view of the stack table shown in FIG. 5. Referring to FIG. 6 in addition to FIGS. 4 and 5, the second electrode 32 is stacked on a second surface 22 of the separator 20 when the stack table 11 faces the transport means 16 that transports the second electrode 32. Here, the separator 20 may be gripped by the second gripper 132 to form a flat surface on which the second electrode 32 is stacked. The second surface 22 of the separator 20 is divided, with the area gripped by the second gripper 132 as the boundary, into a first area 221 of the separator 20 where the second electrode 32 is stacked and a second area 222 that is in unfolded state prior to folding.

Specifically, second and first horizontal ends of the first area 221 of the second surface of the separator 20 are defined by a second horizontal end of the first gripper 131 and a first horizontal end of the second gripper 132, respectively. The second area 222 of the second surface of the separator 20 is defined as a portion that extends and develops in horizontal direction away from the first horizontal end of the second gripper 132.

That is, the manufacturing process according to the embodiment includes: a third step of stacking the second electrode 32 and gripping the separator 20 with the second gripper 132; and a fourth step of folding the separator 20 while wrapping around the second gripper 132. The third step is symmetric to the first step, and the fourth step is symmetric to the second step.

That is, in the fourth step, the separator 20 may be stacked such that the first area 221 and the second area 222 of the second surface face each other. That is, as the fourth step is performed, the second electrode 32 is interposed between the second surfaces 22 of the separator 20 under and above the second electrode 32.

The first step to the fourth step may be repeated several times until the electrode assembly is completed.

### [FIRST EMBODIMENT: INSPECTION OF ELECTRODE ALIGNMENT USING RELATIVE POSITION]

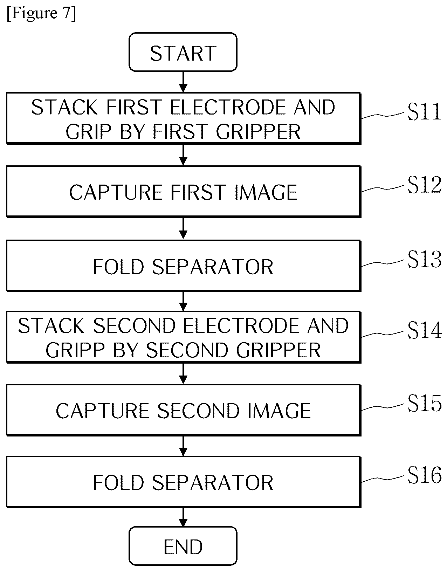

Hereinafter, with reference to FIGS. 7 to 12, an inspection method according to a first embodiment of the present invention will be described in detail. According to the embodiment, provided is the inspection method capable of inspecting alignment between electrodes by comparing the relative positions of the electrodes and the separator with respect to fixed reference points on the stack table and the alignment of each electrode with respect to the separator calculated in comparison therewith.

Referring back to FIGS. 3 and 6, the stack table 11 may be provided with one or more reference points 111 at fixed positions with respect to the stack table 11. Regardless of the shape thereof, it is preferable that the reference points 111 are visually identifiable. In the inspection method according to the embodiment, the reference points 111 may be a reference for detecting the relative positions of the first electrode 31, the second electrode 32 and the separator 20.

It is preferable that the reference point 111 has a rotationally asymmetrical shape or arrangement. When the reference point 111 is provided rotationally symmetric, it is difficult to identify whether the first electrode 31 or the separator 20 has rotated around the reference point 111. For example, a plurality of reference points 111 arranged in at least one of the horizontal and vertical directions may be provided. However, a single reference point 111 may be provided in rotationally asymmetrical shape.

According to the embodiment, a pair of reference points 111 arranged horizontally at one vertical end of the stack table 11 and a pair of reference points 111 arranged horizontally at the other vertical end of the stack table 11 may be provided.

FIG. 7 is a flow chart illustrating an inspection method according to a first embodiment of the present invention. Referring to FIG. 7, the inspection method according to the embodiment includes a first shooting step S12, between the first step S11 and the second step S13, of obtaining a first image by capturing a first shooting area including at least a portion of the first area 211 of the first surface of the separator 20 and at least one reference point 111.

According to the embodiment, by capturing the first electrode 31 and the separator 20 together with the reference point 111, the relative position of the first electrode 31 and the separator 20 with respect to the stack table 11 may be quantitatively detected.

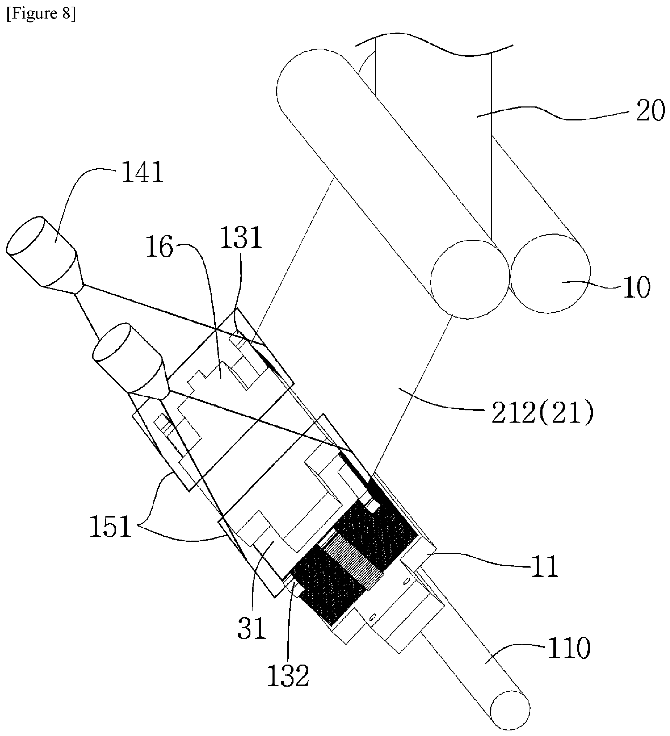

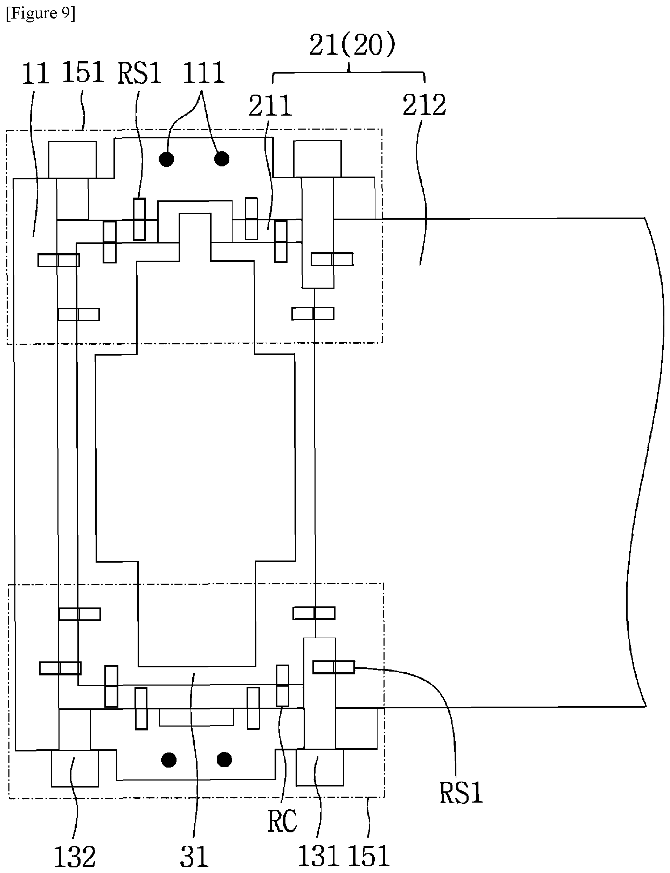

FIG. 8 illustrates an inspection apparatus capturing a first image according to the first embodiment of the present invention. FIG. 9 illustrates a first image with an area of interest set according to the first embodiment of the present invention. Referring to FIGS. 8 and 9, an inspection apparatus performing an inspection method according to the embodiment includes: the stack table 11, the reference point 111, a first camera 141 that captures the first shooting area 151 to obtain the first image, and a processing unit (not shown) analyzing the first image to detect misalignment of the electrode assembly.

The first camera 141 may be arranged to be aligned with the normal direction of the stack table 11 when the first electrode 31 is stacked.

The first shooting area 151 according to the embodiment includes: at least a portion of two vertical ends and at least a portion of two horizontal ends of the first electrode 31; and at least a portion of two vertical ends and at least a portion of the first horizontal end of the separator 20.

According to the embodiment, the positions of the first electrode 31 and the separator 20 with respect to the stack table 11 from the first image may be detected by digitization based on the positions of the ends thereof, and the alignment of the first electrode 31 with respect to the separator 20 may also be identified in comparison thereto.

A plurality of first shooting areas 151 may be provided. Here, at least one reference point 111 must be provided in each of the plurality of first shooting areas 151. In addition, a plurality of first cameras 141 may be provided in response thereto.

According to the embodiment, a pair of first cameras 141 arranged vertically are provided, and among the pair of first cameras 141, a first one of the pair of first cameras 141 may capture an area including at least a portion of the first electrode 31 and at least a portion of a first vertical end of the separator 20, and a second one of the pair of first cameras 141 may capture an area including at least a portion of the first electrode 31 and at least a portion of the second vertical end of the separator 20. Accordingly, the relative position of each of the four ends of the first electrode 31 and the separator 20 with respect to the reference point 111 may be accurately identified, and the center position and the rotation of the first electrode 31 and the separator 20 with respect to the stack table 11 may be accurately identified.

Here, the first shooting area 151 may include at least a portion of the second horizontal end of the first gripper 131, and the position of the second horizontal end of the first gripper 131 may be regarded as the position of the second horizontal end of the separator 20 after the separator 20 is folded.

The inspection method may further include a step of analyzing the first image to inspect damage of the first electrode 31. The damage may include punctures, scratches, tears, folding, etc.

The inspection method may further include a step of analyzing the first image to detect a relative position of the first electrode 31 with respect to the stack table 11. Specifically, in the inspection method according to the embodiment, a predetermined area C (RC) of interest may be set based on the position of the reference point 111 shown in the first image. Here, the relative position of the first electrode 31 with respect to the stack table 11 may be detected based on the position of the edge of the first electrode 31 shown in the area C (RC) of interest.

According to the embodiment, it is preferable that the area C (RC) of interest is set to be a plurality of areas arranged to include at least a portion of the edge of the first electrode 31. For example, two or more area C (RC) of interest may be provided at each of the two horizontal ends and the two vertical ends of the first electrode 31, and accordingly, the center position and the rotation of the first electrode 31 with respect to the stack table 11 may be identified.

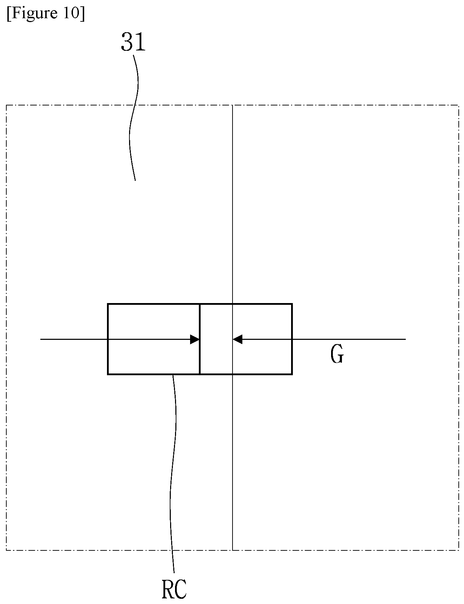

FIG. 10 illustrates a relative position of an electrode or separator with respect to an area of interest according to the first embodiment of the present invention. Referring to FIG. 10, the step of detecting the relative position of the first electrode 31 with respect to the stack table 11 includes: measuring a gap G between the center of the area C (RC) of interest and the edge of the first electrode 31. According to the embodiment, a plurality of gaps G may be measured from the plurality of areas C (RC) of interest set with respect to the reference point 111, and based on this data and the known dimensions of the first electrode 31, a relative position of the first electrode 31 with respect to the stack table 11 may be detected.

The inspection method may further include a step of analyzing the first image to detect the relative position of the separator 20 with respect to the stack table 11. Specifically, in the inspection method, a predetermined area S1 (RS1) of interest may be set based on the position of the reference point 111 shown in the first image. Here, the relative position of the separator with respect to the stack table 11 may be detected based on the position of the edge of the separator 20 shown in the area S1 (RS1) of interest.

According to the embodiment, it is preferable that the area S1 (RS1) of interest is set to be a plurality of areas arranged to include at least a portion of the edge of the separator 20. For example, two or more areas S1 (RS1) of interest may be provided at each of the two horizontal ends and two vertical ends of the separator 20, and accordingly, the center position and the rotation of the separator 20 with respect to the stack table 11 may be identified.

Here, a specific method for detecting the relative position of the separator 20 with respect to the stack table 11 may include a process similar to the above-described method for detecting the relative position of the first electrode 31 with respect to the stack table 11.

The inspection method may further include a step of inspecting the alignment of the first electrode 31 with respect to the separator 20 based on the relative position of the first electrode 31 with respect to the reference point 111 and the relative position of the separator 20 with respect to the reference point 111.

The area S1 of interest may include one area including the first horizontal end of the separator 20 and another area including the second horizontal end of the first gripper 131. Here, when inspecting the alignment of the first electrode 31 with respect to the separator 20, the relative position of the second horizontal end of the first gripper 131 with respect to the reference point 111 may be regarded to correspond to that of the second horizontal end of the separator 20 with respect to the reference point 111.

In the first image, the separator 20 appears in an unfolded state prior to folding. Thus, the second horizontal end of the separator 20 is not defined. However, since the separator 20 is folded while wrapping around the first gripper 131, the second horizontal end of the separator 20 formed by folding the separator 20 in the second step corresponds to the second horizontal end of the first gripper 131. Thus, by detecting the relative position of the second horizontal end of the first gripper 131 with respect to the reference point 111 as described above, the position of the second horizontal end of the separator 20 formed by folding the separator 20 may be detected in advance.

According to the embodiment, it is advantageous that not only the relative positions of the first electrode 31 and the separator 20 with respect to the stack table 11, but also the relative positions of the first electrode 31 and the separator 20 with respect to each other may be determined from a single image. Here, since the positions of the first electrode 31 and the separator 20 are relative positions detected from a single image, the relative position of the first electrode 31 with respect to the separator 20 may be detected regardless of whether the separator 20 and the first electrode 31 are moved in parallel or rotated together with respect to the stack table 11.

In addition, according to the embodiment, it is advantageous that the gap between the second horizontal end of the separator 20 that is to be folded and the second horizontal end of the first electrode 31 may be known even before the separator 20 is folded while wrapping around the first gripper 131.

Referring back to FIG. 7, the inspection method further includes a second shooting step S15, between the third step S14 and the fourth step S16, of obtaining a second image by capturing a second shooting area including at least a portion of the first area 221 of the second surface of the separator 20 and at least one reference point 111.

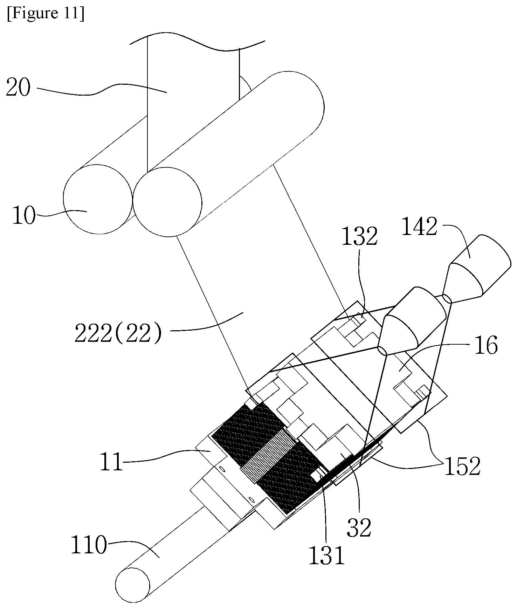

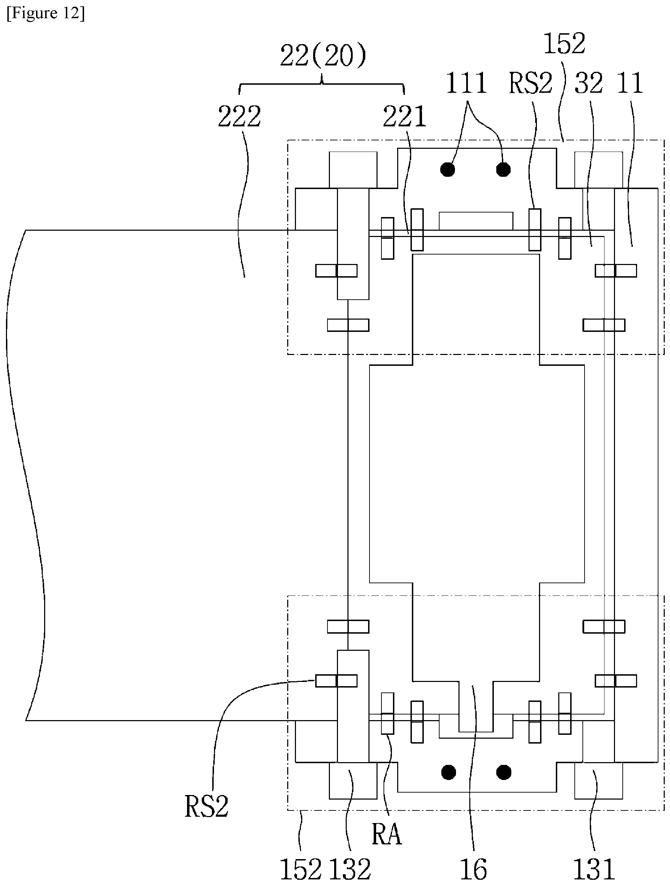

FIG. 11 illustrates an inspection apparatus capturing a second image according to the first embodiment of the present invention, and FIG. 12 illustrates a second image with an area of interest set according to the first embodiment of the present invention. Referring to FIGS. 11 and 12, the inspection apparatus may further include a second camera 142 obtaining the second image by capturing the second shooting area 152.

The second camera 142 may be arranged to be aligned with the normal direction of the stack table 11 when the second electrode 32 is stacked.

The second shooting area 152 according to the embodiment includes: at least a portion of two vertical ends and at least a portion of two horizontal ends of the second electrode 32; and at least a portion of two vertical ends and at least a portion of the second horizontal end of the separator 20, and the processing unit (not shown) may analyze the first image and the second image to detect misalignment of the electrode assembly.

The processing unit (not shown) may detect the alignment of the first electrode 31 and the alignment of the second electrode 32 with respect to the separator 20 from the first image and the second image, and may also detect the alignment between the first electrode 31 and the second electrode 32 based on the alignment of the first electrode 31 and the alignment of the second electrode 32.

The second shooting area 152 may include at least a portion of the first horizontal end of the second gripper 132. The position of the first horizontal end of the second gripper 132 may be regarded as the position of the first horizontal end of the separator after the separator is folded.

The inspection method according to the embodiment may further include: a step of analyzing the second image to detect a relative position of the second electrode 32 with respect to the stack table 11; a step of analyzing the second image to detect a relative position of the separator 20 with respect to the stack table 11; and a step of inspecting an alignment of the second electrode 32 with respect to the separator 20 based on the relative position of the second electrode 32 with respect to the reference point 111 and the relative position of the separator 20 with respect to the reference point.

Specifically, according to the embodiment, a predetermined area A (RA) of interest and an area S2 (RS2) of interest may be set based on the position of the reference point 111 shown in the second image. Here, the relative position of the second electrode 32 with respect to the stack table 11 may be detected based on the position of the edge of the second electrode 32 shown in the area A (RA) of interest, and the relative position of the separator 20 with respect to the stack table 11 may be detected based on the position of the edge of the separator 20 shown in the area S2 (RS2) of interest.

According to the embodiment, it is preferable that a plurality of areas A (RA) of interest and a plurality of areas S2 (RS2) of interest are set such that the second electrode 32 and at least a portion of the edge of the separator 20 are included, respectively. For example, two or more areas A (RA) of interest and two or more areas S2 of interest (RS2) may be provided at the two horizontal ends and two vertical ends of the second electrode 32 and the separator 20, respectively, and accordingly, the center position and the rotation of the second electrode 32 and the separator 20 with respect to the stack table 11 may be identified.

Here, a specific method for detecting the relative position of the second electrode 32 and the separator 20 with respect to the stack table 11 may include a process similar to the above-described method for detecting the relative position of the second electrode 32 with respect to the stack table 11.

As in analyzing the first image, the alignment of the second electrode 32 to the separator 20 may be inspected by comparing the relative position of the edge of the second electrode 32 in the area A (RA) of interest with that of the edge of the separator 20 in the area S2 (RS2) of interest.

The area S2 (RS2) of interest may include one area including the second horizontal end of the separator 20 and another area including the first horizontal end of the second gripper 132. Here, when inspecting the alignment of the second electrode 32 with respect to the separator 20, the relative position of the first horizontal end of the second gripper 132 with respect to the reference point 111 may be regarded to correspond to that of the first horizontal end of the separator 20 with respect to the reference point 111.

In the second image, the separator 20 appears in an unfolded state prior to folding. Thus, the first horizontal end of the separator 20 is not defined. However, since the separator 20 is folded while wrapping around the second gripper 132, the first horizontal end of the separator 20 formed by folding the separator 20 in the first step corresponds to the first horizontal end of the second gripper 132. Thus, by detecting the relative position of the first horizontal end of the second gripper 132 with respect to the reference point 111 as described above, the position of the first horizontal end of the separator 20 formed by folding the separator 20 may be detected in advance.

The inspection method may further include a step of inspecting the alignment of the first electrode 31 and the second electrode 32 with respect to each other by comparing the alignment of the first electrode 31 with respect to the separator 20 with that of the second electrode 32 with respect the separator 20. Specifically, the step of inspecting the alignment of the first electrode 31 and the second electrode 32 with respect to each other may be performed by comparing the relative positions of the four ends of the first electrode 31 and the second electrode 32 with respect to each other.

For example, in order to detect the gap between the second horizontal end of the first electrode 31 and the second horizontal end of the second electrode, the first gap between the second horizontal end of the first gripper 131 and the second horizontal end of the first electrode 31 shown in the first image may be compared to the second gap between the second horizontal end of the separator 20 and the second horizontal end of the second electrode 32 shown in the second image. Here, the first gap may be detected based on the position of the second horizontal end of the first gripper 131 shown in the area S1 (RS1) of interest, the position of the second horizontal end of the first electrode 31 shown in the area C (RC) of interest, and a predetermined positional relationship between the area S1 (RS1) of interest and the area C (RC) of interest. Similarly, the second gap may be detected based on the position of the second horizontal end of the separator 20 shown in the area S2 (RS2) of interest, the position of the second horizontal end of the second electrode 32 shown in the area A (RA) of interest, and a predetermined positional relationship between the area S2 (RS2) of interest and the area A (RA) of interest. Here, the positions of the areas RC, RS1, RA and RS2 of interest are set with respect to the reference point 111.

According to the embodiment, regardless of the movement in parallel or rotation of the first electrode 31, the second electrode 32 and the separator 20 with respect to the stack table 11, it is possible to detect whether there are misalignments of the first electrode 31 and the second electrode 32 with respect to the separator 20, and regardless of the manufacturing equipment variables such as camera vibration or positional change, it is also possible to detect whether there are misalignments between the first electrode 31 and the second electrode 32. In addition, by regarding the end of the first gripper 131 and/or the second gripper 132 as the end of the separator 20, it is possible to identify the relative alignment between the first electrode 31, the second electrode 32 and the separator 20 even before the end is formed prior to the folding of the separator 20.

### [SECOND EMBODIMENT: SIMULTANEOUS INSPECTION OF SEPARATOR DAMAGE AND ELECTRODE ALIGNMENT]

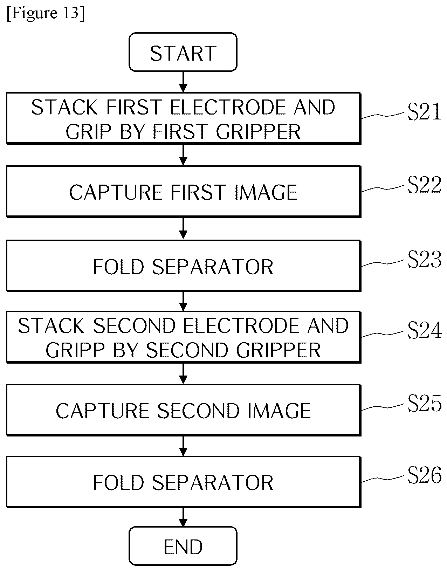

Hereinafter, with reference to FIGS. 13 to 17, an inspection method according to a second embodiment of the present invention will be described in detail. According to the embodiment, provided is an inspection method capable of simultaneously inspecting the alignment of the electrodes and/or the separator and simultaneously performing a visual inspection of the damage of the entire separator with minimal photography by simultaneously capturing the first area and the second area.

FIG. 13 is a flow chart illustrating an inspection method according to a second embodiment of the present invention. Referring to FIG. 13, the inspection method according to the second embodiment includes a first shooting step S22 of obtaining, between the first step S21 and the second step S23, a first image by capturing the first shooting area 151 including the first area 211 and the second area 212 of the first surface of the separator 20.

The inspection method may further include a step of analyzing the first image to detect damage of the separator 20. According to the embodiment, by capturing the unfolded separator together with the electrode before folding for stacking, the stacking defect of the electrode and the damage to the separator may be inspected simultaneously.

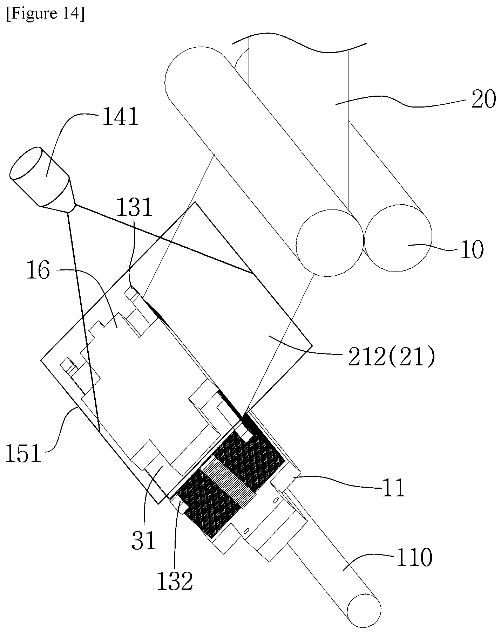

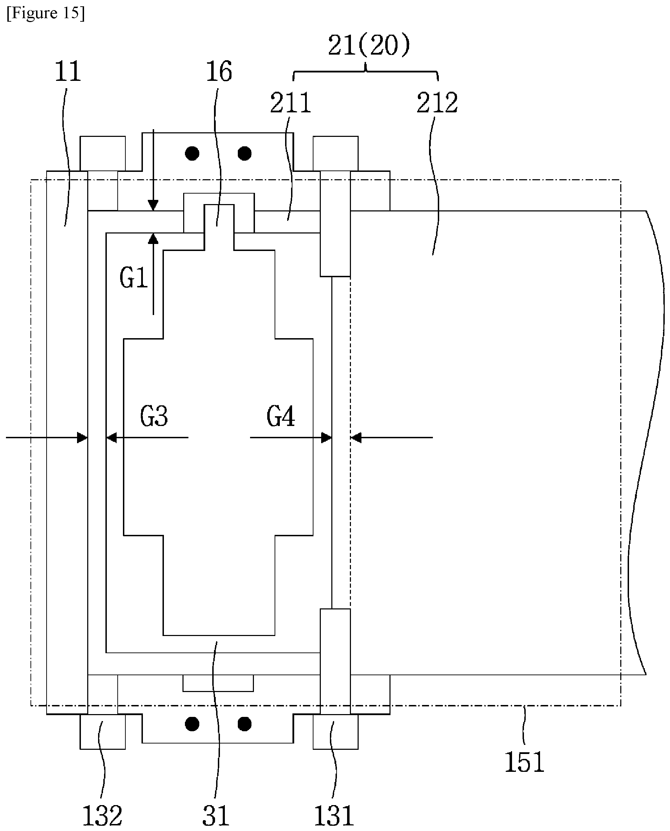

FIG. 14 is a view illustrating an inspection apparatus capturing a first image according to the second embodiment of the present invention. FIG. 15 illustrates a first gap, a third gap and a fourth gap according to the second embodiment of the present invention. Referring to FIGS. 14 and 15, an inspection apparatus performing an inspection method according to the embodiment includes: the stack table 11, the reference point 111, the first camera 141 that captures the first shooting area 151 to obtain the first image, and a processing unit (not shown) analyzing the first image to detect misalignment of the electrode assembly.

The first camera 141 may be arranged to be aligned with the normal direction of the stack table 11 when the first electrode 31 is stacked.

According to the embodiment, the area of the second area 212 of the first surface of the separator 20 included in the first shooting area 151 may be equal to or larger than that of the first area 211 of the first surface of the separator 20 included in the first shooting area 151. Accordingly, damage detection may be performed for the entire area corresponding to the first area 211 of the first surface of the separator 20 among the second area 212 of the first surface of the separator 20.

Here, the area of the second area 212 of the first surface of the separator 20 included in the first shooting area 151 refers to the actual area of the second area 212 included in the first image, regardless of the area of the second area 212 projected on the first image. For example, when the normal direction of the second area 212 forms a 60-degree angle with the direction in which the first camera 141 faces, the area of the second area 212 projected on the first image may be half of the actual area of the second area 212 included in the first shooting area 151.

The first shooting area 151 may include: at least a portion of two vertical ends and at least a portion of two horizontal ends of the first electrode 31; and at least a portion of two vertical ends and at least a portion of the first horizontal end of the separator 20. As a result, the gap between the ends of the separator 20 and the first electrode 31 may be detected from the first image.

Here, the first shooting area 151 may include at least a portion of the second horizontal end of the first gripper 131. Since the separator 20 shown in the first image is before folding, the second horizontal end of the separator 20 is not detected in the first image. However, since the separator 20 is folded at the second horizontal end of the first gripper 131, the position of the second horizontal end of the first gripper 131 may be regarded as the position of the second horizontal end of the separator 20.

The inspection method may further include a step of analyzing the first image to inspect damage of the first electrode 31. The damage may include punctures, scratches, tears, folding, etc.

The inspection method may further include a step of analyzing the first image to inspect the alignment of the first electrode 31 with respect to the separator 20. According to the embodiment, the inspection method may include a process of inspecting the alignment of the first electrode 31 with respect to the separator 20 by detecting a gap between one end of the separator 20 and one end of the same side of the first electrode 31 from the first image.

Specifically, in the inspection method, a gap G1 between one vertical end of the separator 20 and one vertical end of the first electrode 31 may be detected from the first image. Here, since the vertical lengths of the separator 20 and the first electrode 31 are known, the relative arrangement of the first electrode 31 with respect to the separator 20 may be identified.

In addition, in the inspection method, the gap G3 between the first horizontal ends of the separator 20 and the first electrode 31 may be detected from the first image. Similarly, since the horizontal lengths of the separator 20 and the first electrode 31 are known, the relative arrangement of the first electrode 31 with respect to the separator 20 may be identified.

In contrast, in the inspection method, the gap G4 between the second horizontal ends of the first gripper 131 and the first electrode 31 may also be detected from the first image. Since the separator 20 is folded at the second horizontal end of the first gripper 131 in the second step, the second horizontal end of the first gripper 131 may define the position of the second horizontal end of the separator 20 after folding. That is, by detecting the gap G3 between the second horizontal ends of the first gripper 131 and the first electrode 31, the gap between the second horizontal end formed by folding the separator 20 and the second horizontal end of the first electrode 31 may be detected before the actual folding of separator 20.

Referring back to FIG. 13, the inspection method may further include a second shooting step S15, between the third step S14 and the fourth step S16, of obtaining a second image by capturing a second shooting area including both the first area 221 and the second area 222 of the second surface of the separator 20.

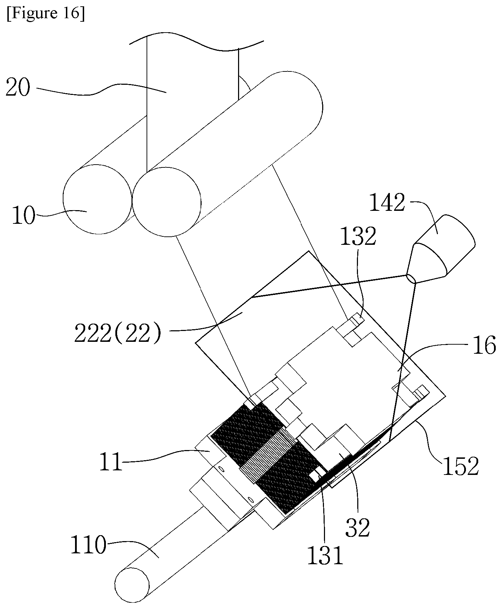

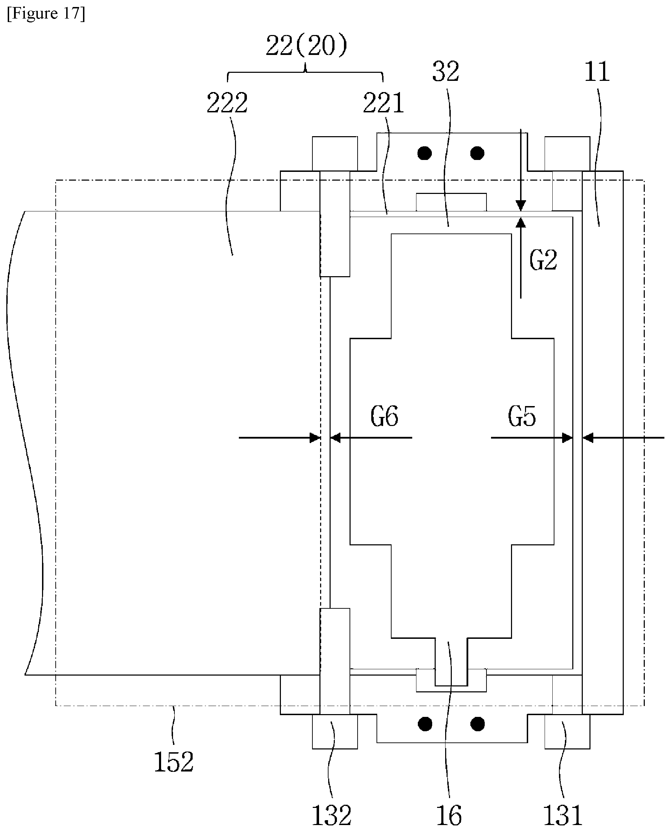

FIG. 16 illustrates an inspection apparatus capturing a second image according to the second embodiment of the present invention, and FIG. 17 illustrates a second gap, a fifth gap and a sixth gap according to the second embodiment of the present invention. Referring to FIGS. 16 and 17, the inspection apparatus may further include a second camera 142 obtaining the second image by capturing the second shooting area 152.

The second camera 142 may be arranged to be aligned with the normal direction of the stack table 11 when the second electrode 32 is stacked.

According to the embodiment, the area of the second area 222 of the second surface of the separator 20 included in the second shooting area 152 may be equal to or larger than that of the first area 221 of the second surface of the separator 20 included in the second shooting area 152. Accordingly, damage detection may be performed for the entire area corresponding to the first area 221 of the second surface of the separator 20 among the second area 222 of the second surface of the separator 20.

Here, the area of the second area 222 of the second surface of the separator 20 included in the second shooting area 152 refers to the actual area of the second area 222 included in the second image, regardless of the area of the second area 222 projected on the second image. For example, when the normal direction of the second area 222 forms a 60-degree angle with the direction in which the second camera 142 faces, the area of the second area 222 projected on the second image may be half of the actual area of the second area 222 included in the second shooting area 152.

The second shooting area 152 may include: at least a portion of two vertical ends and at least a portion of two horizontal ends of the second electrode 32; and at least a portion of two vertical ends and at least a portion of the second horizontal end of the separator 20. As a result, the gap between the ends of the separator 20 and the second electrode 32 may be detected from the second image.

Here, the second shooting area 152 may include at least a portion of the first horizontal end of the second gripper 132. Since the separator 20 shown in the second image is before folding, the first horizontal end of the separator 20 is not detected in the second image. However, since the separator 20 is folded at the first horizontal end of the second gripper 132, the position of the first horizontal end of the second gripper 132 may be regarded as the position of the first horizontal end of the separator 20.

Here, the inspection method may further include a step of analyzing the second image to inspect the alignment of the second electrode 32 with respect to the separator 20.

Specifically, in the inspection method, a gap G2 between the vertical ends of the separator 20 and the second electrode 32 of the same side may be detected from the second image. Here, since the vertical lengths of the separator 20 and the second electrode 32 are known, the relative arrangement of the second electrode 32 with respect to the separator 20 may be identified.

In addition, in the inspection method, a gap G5 between the second horizontal ends of the separator 20 and the second electrode 32 may be detected from the second image. Similarly, since the horizontal lengths of the separator 20 and the second electrode 32 are known, the relative arrangement of the second electrode 32 with respect to the separator 20 may be identified.

In contrast, in the inspection method, the gap G6 between the first horizontal ends of the second gripper 132 and the second electrode 32 may also be detected from the second image. Since the separator 20 is folded at the first horizontal end of the second gripper 132 in the fourth step, the first horizontal end of the second gripper 132 may define the position of the first horizontal end of the separator 20 after folding. That is, by detecting the gap G6 between the first horizontal ends of the second gripper 132 and the second electrode 32, the gap between the first horizontal end formed by folding the separator 20 and the first horizontal end of the second electrode 32 may be detected before the actual folding of separator 20.

The inspection step may further include a step of inspecting the alignment of the second electrode 32 with respect to the first electrode 31 based on the alignment of the first electrode 31 with respect to the separator 20 and the alignment of the second electrode 32 with respect to the separator 20.

Specifically, in the inspection method according to the embodiment, a first gap G1 between the vertical ends of the separator 20 and the first electrode 31 of the same side and a second gap G2 between the vertical ends of the separator 20 and the second electrode 32 of the same side may be detected from the second image, and the vertical alignment between the first electrode 31 and the second electrode 32 may be inspected based on the first gap G1 and the second gap G2. Here, since the vertical lengths of the separator 20, the first electrode 31 and the second electrode 32 are known, the relative arrangement of the first electrode 31 and the second electrode 32 may be identified.

In addition, in the inspection method according to the embodiment, at least one of a third gap G3 between the first horizontal ends of the separator 20 and the first electrode 31 and a fourth gap G4 between the second horizontal ends of the first gripper 131 and the first electrode 31 may be detected from the first image, and at least one of a fifth gap G5 between the second horizontal ends of the separator 20 and the second electrode 32 and a sixth gap G6 between the first horizontal ends of the second gripper 132 and the second electrode 32 may be detected from the second image, and the horizontal alignment between the first electrode 31 and the second electrode 32 may be inspected based on the detected gap values.

For example, the horizontal alignment between the first electrode 31 and the second electrode 32 may be inspected based on the third gap G3 and the fifth gap G5. Here, since the horizontal gap between the first gripper 131 and the second gripper 132 is constant, the gap between the first horizontal end and the second horizontal end of the separator 20 regulated by these grippers 131 and 132, i.e., the horizontal length of the separator 20, is also constant. In addition, since the horizontal lengths of the first electrode 31 and the second electrode 32 are known, the relative arrangement of the first electrode 31 and the second electrode 32 may be identified based on the third gap G3 and the fifth gap G5.

According to an embodiment of the present invention, the horizontal alignment between the first electrode 31 and the second electrode 32 may be inspected based on the fourth gap G4 and the fifth gap G5. Here, the position of the second horizontal end of the first gripper 131 between the first step and the second step corresponds to the position of the second horizontal end of the separator 20 between the third step and the fourth step such that the distance between the second horizontal end of each of the first electrode 31 and the second electrode 32 and the second horizontal end of the separator 20 may be compared by comparing the fourth gap G4 and the fifth gap G5, and based on the comparison, the relative arrangement of the first electrode 31 and the second electrode 32 may be identified.

According to the embodiment, a complete inspection of the separator for damage is possible by capturing the second area before the folding of the separator together with the first area where the electrode is stacked, and the alignment between the first electrode and the second electrode may be inspected by regarding the end of the gripper as the end of the separator and merely by comparing the first image and the second image captured separately for the first electrode and the second electrode, respectively, thereby enabling a quick and economical inspection of the alignment and damage of the electrode assembly with a minimum number of images.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An inspection method of visually inspecting manufacturing defects of an electrode assembly in a manufacturing process the electrode assembly manufacture by stacking a plurality of electrodes and a separator on a stack table provided with one or more reference points at fixed positions,
wherein the manufacturing process comprises:
a first step of stacking a first electrode on a first area of a first surface of the separator and gripping by a first gripper a boundary between the first area of the first surface and a second area of the first surface of the separator;
a second step of folding the separator such that the first area of the first surface faces the second area of the first surface;
a third step of stacking a second electrode on a first area of a second surface of the separator and gripping by a second gripper a boundary between the first area of the second surface and a second area of the second surface of the separator; and
a fourth step of folding the separator such that the first area of the second surface faces the second area of the second surface,
the inspection method comprising:
a first shooting step of obtaining, between the first step and the second step, a first image by capturing a first shooting area encompassing at least a portion of the first area of the first surface of the separator and at least one of the one or more reference points.

2. The inspection method of claim 1, wherein a plurality of first shooting areas are provided.

3. The inspection method of claim 1, wherein a plurality of reference points are provided arranged in at least one of horizontal direction and vertical direction.

4. The inspection method of claim 1, further comprising: analyzing the first image to inspect whether the first electrode is damaged.

5. The inspection method of claim 1, further comprising: analyzing the first image to detect a relative position of the first electrode with respect to the stack table.

6. The inspection method of claim 5, wherein an area C of interest is set based on a position of a reference point shown in the first image, and
a relative position of the first electrode with respect to the stack table is detected based on a position of an edge of the first electrode shown in the area C of interest.

7. The inspection method of claim 1, wherein further comprising: analyzing the first image to detect a relative position of the separator with respect to the stack table.

8. The inspection method of claim 7, wherein an area S1 of interest is set based on a position of a reference point shown in the first image, and
a relative position of the separator with respect to the stack table is detected based on a position of an edge of the separator shown in the area S1 of interest.

9. The inspection method of claim 5, further comprising: analyzing the first image to detect a relative position of the separator with respect to the stack table; and
inspecting an alignment of the first electrode with respect to the separator based on the relative position of the first electrode with respect to a reference point and a relative position of the separator with respect to a reference point.

10. The inspection method of claim 9, wherein an area C of interest and an area S1 of interest are set based on a position of a reference point shown in the first image,
a relative position of the separator with respect to the stack table is detected based on a position of an edge of the separator shown in the area S1 of interest, and
the alignment of the first electrode with respect to the separator is inspected by comparing a relative position of an edge of the first electrode shown in the area C of interest with a relative position of the edge of the separator shown in the area S1 of interest.

11. The inspection method of claim 10, wherein the area S1 of interest comprises one area encompassing a first horizontal end of the separator and another area encompassing a second horizontal end of the first gripper, and
a relative position of the second horizontal end of the first gripper with respect to a reference point is regarded to correspond to that of a second horizontal end of the separator with respect to a reference point when the alignment of the first electrode with respect to the separator is inspected.

12. The inspection method of claim 1, further comprising: a second shooting step of obtaining, between the third step and the fourth step, a second image by capturing a second shooting area encompassing at least a portion of the first area of the second surface of the separator and at least one of the one or more reference points.

13. The inspection method of claim 9, further comprising: analyzing the second image to detect a relative position of the second electrode with respect to the stack table;
analyzing the second image to detect a relative position of the separator with respect to the stack table;
inspecting an alignment of the second electrode with respect to the separator based on the relative position of the second electrode with respect to a reference point and a relative position of the separator with respect to a reference point; and
inspecting an alignment of the first electrode and the second electrode with respect to each other by comparing the alignment of the first electrode with respect to the separator and an alignment of the second electrode with respect to the separator.

14. The inspection method of claim 13, further comprising: setting an area C of interest and an area S1 of interest based on a position of a reference point shown in the first image, detecting a relative position of the first electrode with respect to the stack table based on a position of an edge of the first electrode shown in the area C of interest, detecting a relative position of the separator with respect to the stack table based on a position of an edge of the separator shown in the area S1 of interest, and inspecting the alignment of the first electrode with respect to the separator by comparing a relative position of an edge of the first electrode shown in the area C of interest with a relative position of the edge of the separator shown in the area S1 of interest; and
setting an area A of interest and an area S2 of interest based on a position of a reference point shown in the first image, detecting a relative position of the second electrode with respect to the stack table based on a position of an edge of the first electrode shown in the area A of interest, detecting a relative position of the separator with respect to the stack table based on a position of an edge of the separator shown in the area S2 of interest, and inspecting the alignment of the first electrode with respect to the separator by comparing a relative position of an edge of the first electrode shown in the area A of interest with a relative position of the edge of the separator shown in the area S2 of interest.

15. The inspection method of claim 14, wherein the area of interest S1 comprises one area encompassing a first horizontal end of the separator and another area encompassing a second horizontal end of the first gripper, and
a relative position of the second horizontal end of the first gripper with respect to a reference point is regarded to correspond to that of a second horizontal end of the separator with respect to a reference point when the alignment of the first electrode with respect to the separator is inspected.

16. The inspection method of claim 14, wherein the area of interest S2 comprises one area encompassing a second horizontal end of the separator and another area encompassing a first horizontal end of the second gripper, and
a relative position of the first horizontal end of the second gripper with respect to a reference point is regarded to correspond to that of a first horizontal end of the separator with respect to a reference point when the alignment of the second electrode with respect to the separator is inspected.

17. An inspection apparatus visually inspecting manufacturing defects of an electrode assembly in a manufacturing process the electrode assembly manufacture by stacking a plurality of electrodes and a separator,
wherein the manufacturing process comprises:
a first step of stacking a first electrode on a first area of a first surface of the separator and gripping by a first gripper a boundary between the first area of the first surface and a second area of the first surface of the separator;
a second step of folding the separator such that the first area of the first surface faces the second area of the first surface;
a third step of stacking a second electrode on a first area of a second surface of the separator and gripping by a second gripper a boundary between the first area of the second surface and a second area of the second surface of the separator; and
a fourth step of folding the separator such that the first area of the second surface faces the second area of the second surface,
the inspection apparatus comprising:
a stack table whereon the first electrode, the second electrode and the separator are stacked;
a reference point provided on the stack table at a fixed position;
a first camera obtaining a first image by capturing a predetermined first shooting area encompassing the reference point; and
a processing unit analyzing the first image to detect a misalignment of the electrode assembly,
wherein the first shooting area comprises:
at least a portion of two vertical ends and at least a portion of two horizontal ends of the first electrode; and
at least a portion of two vertical ends and at least a portion of a first horizontal end of the separator.

18. The inspection apparatus of claim 17, wherein the first shooting area further comprises at least a portion of a second horizontal end of the first gripper.

19. The inspection apparatus of claim 17, wherein a plurality of first cameras are provided.

20. The inspection apparatus of claim 19, wherein a pair of first cameras arranged vertically are provided, and
a first one of the pair of first cameras captures an area comprising at least a portion of the first electrode and at least a portion of a first vertical end of the separator, and
a second one of the pair of first cameras captures an area comprising at least a portion of the first electrode and at least a portion of a second vertical end of the separator,

21. The inspection apparatus of claim 17, further comprising: a second camera obtaining a second image by capturing a predetermined second shooting area encompassing the reference point,
wherein the second shooting area comprises:
at least a portion of two vertical ends and at least a portion of two horizontal ends of the second electrode; and
at least a portion of the two vertical ends and at least a portion of a second horizontal end of the separator, and
the processing unit analyzes the first image and the second image to detect misalignment of the electrode assembly.

22. The inspection apparatus of claim 21, wherein the second shooting area comprises at least a portion of a first horizontal end of the second gripper.
